(19) Europäisches Patentamt
European Patent Office
Office européen des brevets

(11) EP 4 488 790 A1

(12) EUROPÄISCHE PATENTANMELDUNG

(43) Veröffentlichungstag:
08.01.2025 Patentblatt 2025/02

(21) Anmeldenummer: 24187146.6

(22) Anmeldetag: 08.07.2024

(51) Internationale Patentklassifikation (IPC):
G05D 23/19 (2006.01)    F24F 11/30 (2018.01)

(52) Gemeinsame Patentklassifikation (CPC):
G05D 23/1904; F24F 11/30; F24F 11/46;
F24F 11/62; F24F 2120/00; F24F 2120/10

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(30) Priorität: 07.07.2023 DE 102023206459

(71) Anmelder: Robert Bosch GmbH
70442 Stuttgart (DE)

(72) Erfinder: Beran, Tobias
73728 Esslingen Am Neckar (DE)

(54) VERFAHREN UND INNENRAUMTEMPERIERVORRICHTUNG

(57) Die Erfindung geht aus von einem Verfahren zum Betrieb einer Innenraumtemperiervorrichtung (10a; 10b), insbesondere einer Heizungs- und/oder Klimaanlage, mit welchem eine Innenraumtemperatur (48a; 48b) eines Innenraums (16a; 16b) geregelt wird.

Es wird vorgeschlagen, dass in zumindest einem Verfahrensschritt (18a; 18b) eine Personenabwesenheitserwartung (26a; 26b) ermittelt und in zumindest einem weiteren Verfahrensschritt (20a; 20b, 22a; 22b, 24a; 24b) die Innenraumtemperatur (48a; 48b) zumindest in Abhängigkeit von der Personenabwesenheitserwartung (26a; 26b) geregelt wird.

## Fig. 1

**Beschreibung**

Stand der Technik

Es ist bereits ein Verfahren zum Betrieb einer Innenraumtemperiervorrichtung, insbesondere einer Heizungs- und/oder Klimaanlage, mit welchem eine Innenraumtemperatur eines Innenraums geregelt wird, vorgeschlagen worden.

Offenbarung der Erfindung

Die Erfindung geht aus von einem Verfahren zum Betrieb einer Innenraumtemperiervorrichtung, insbesondere einer Heizungs- und/oder Klimaanlage, mit welchem eine Innenraumtemperatur eines Innenraums geregelt wird.

Es wird vorgeschlagen, dass eine Personenabwesenheitserwartung ermittelt wird und die Innenraumtemperatur zumindest in Abhängigkeit von der Personenabwesenheitserwartung geregelt wird.

Durch die erfindungsgemäße Ausgestaltung des Verfahrens kann vorteilhaft ein Betrieb mit geringen Kosten bereitgestellt werden, da insbesondere ein Energieverbrauch durch die Regelung der Innenraumtemperatur in Abhängigkeit von der Personenabwesenheitserwartung geringgehalten werden kann. Vorteilhaft kann ein hoher Nutzerkomfort bereitgestellt werden, da insbesondere bei einer Rückkehr eines Nutzers eine Wohlfühltemperatur des Nutzers bereitgestellt wird. Vorteilhaft kann eine besonders hohe Temperiereffizienz bereitgestellt werden, da insbesondere ein Innenraum nur dann temperiert wird, wenn der Nutzer sich in dem Raum aufhält.

Vorzugsweise wird mit dem Verfahren zumindest der eine Innenraum, vorzugsweise von einem Gebäude, temperiert. Vorzugsweise wird die Innenraumtemperiervorrichtung als eine Heizungsanlage und/oder als eine Klimaanlage betrieben. Vorzugsweise wird dem Innenraum zur Innenraumtemperierung eine Wärmeenergie zugeführt und/oder von dem Innenraum abgeführt. Vorzugsweise wird mit dem Verfahren ein Energieverbrauch der Innenraumtemperiervorrichtung reduziert. Vorzugsweise ist das Verfahren als ein Energieeinsparverfahren ausgebildet, welches ein aktives Innenraumtemperierprogramm ersetzt, wenn eine Personenabwesenheit detektiert wird. Vorzugsweise wird die Personenabwesenheit detektiert, sobald die letzte Person den Innenraum verlassen hat und/oder keine Person mehr im Innenraum detektiert wird. Vorzugsweise wird die Innenraumtemperatur zumindest in Abhängigkeit von der Personenabwesenheitserwartung geregelt. Vorzugsweise wird, beispielsweise mit einem Radarsensor, Infrarotsensor und/oder einem vergleichbaren Sensor der Innenraumtemperiervorrichtung, die Personenabwesenheit in dem zu temperierenden Innenraum detektiert. Vorzugsweise wird zumindest eine Zeitdauer und ein Zeitpunkt, insbesondere ein Startzeitpunkt, der Personenabwesenheit detektiert und gespeichert. Vorzugsweise wird die Personenabwesenheitserwartung anhand der detektierten und gespeicherten Personenabwesenheit bestimmt/ermittelt. Vorzugsweise werden die detektierten und gespeicherten Zeitdauern der Personenabwesenheiten anhand der Zeitpunkte der Personenabwesenheiten einem vordefinierten Zeitraum, beispielsweise einem zwischen zwei Uhrzeiten angeordneten Zeitintervall, zugeordnet. Beispielsweise könnten alle detektierten Zeitdauern der Personenabwesenheit, welche den Startzeitpunkt zwischen 12 Uhr und 13 Uhr aufweisen, einer Berechnung der Personenabwesenheitserwartung zugrunde gelegt werden. Insbesondere werden die Zeitdauern der Personenabwesenheit in Zeitabschnitte, wie beispielsweise Zeitspannen von 5 Minuten oder 15 Minuten oder dergleichen, aufgeteilt. Beispielsweise könnten die ermittelten Zeitdauern der Personenabwesenheit gruppiert/kategorisiert werden. Alternativ könnten auch exakte oder gerundete Zeitdauern der Personenabwesenheit berücksichtigt werden. Insbesondere ist die Personenabwesenheitserwartung als eine, vorzugsweise gewichtete, in Zeitabschnitte aufgeteilte Zeitdauer der Personenabwesenheit ausgebildet, welche dem Zeitraum zugeordnet ist. Vorzugsweise ist die Personenabwesenheitserwartung als die Zeitdauer der Personenabwesenheit ausgebildet, welche eine höchste Eintrittswahrscheinlichkeit aufweist. Vorzugsweise wird jeder Zeitabschnitt, welcher eine Personenabwesenheitsdauer aufweist, mit der Anzahl der in dem Zeitabschnitt detektierten Personenabwesenheitsdauern gewichtet. Es ist denkbar, dass zumindest eine alternative oder weitere Gruppierung/Kategorisierung, wie beispielsweise eine Jahreszeit oder ein Monat oder ein weiterer Zeitraum, berücksichtigt wird. Alternativ könnte die Personenabwesenheitserwartung auch aus einer Cloud übermittelt werden. Beispielsweise könnte die Cloud auch externe Zeitpunkte ermitteln, wie beispielsweise, wenn Mitarbeiter die Kantine verlassen und in das Büro zurückkehren. Unter einem "Zeitintervall" soll dabei insbesondere eine Zeitdauer, welche eine definierte Uhrzeit als Anfangszeit und eine definierte Uhrzeit als Endzeit aufweist, verstanden werden. Unter einer "Personenabwesenheitserwartung" soll dabei insbesondere eine statistische Wahrscheinlichkeit über einer an einen Startzeitpunkt gekoppelten Personenabwesenheit und/oder Personenabwesenheitsdauer, vorzugsweise eine mittlere Personenabwesenheitsdauer, beispielsweise Pausenlänge, verstanden werden. Insbesondere ist die Personenabwesenheitsdauer die Zeitdauer der Personenabwesenheit, welche die höchste Wahrscheinlichkeit aufweist.

Vorzugsweise wird eine aktive Regelung der Innenraumtemperatur abgeschaltet, wenn die Personenabwesenheit detektiert wird. Nachdem die aktive Regelung der Innenraumtemperatur abgeschaltet ist, wird die Innenraumtemperatur sich selbst überlassen. Vorzugsweise findet eine natürliche Erhöhung/Absenkung der Innenraumtemperatur statt, welche beispielsweise zumindest von einer Außentemperatur abhängt. Vorzugsweise wird die Erhöhung/Absenkung der Innenraumtemperatur durch ein Abschalten der Innenraumtemperierung erreicht. Es ist denkbar, dass die Innenraumtemperiervorrichtung zur Erhöhung/Absenkung der Innenraumtemperatur in einen Standby-Modus überführt oder deaktiviert wird. Vorzugsweise wird die Innenraumtemperatur auch im Standby-Modus oder bei abgeschalteter Innenraumtemperaturvorrichtung weiterhin ermittelt/gemessen. Vorzugsweise wird die Innenraumtemperiervorrichtung derart vor einem erwarteten Pausenende aktiviert, dass die Innenraumtemperatur bei einer erwarteten Personenrückkehr zumindest im Wesentlichen bei der eingestellten Solltemperatur vor/bei Pausenbeginn liegt. Vorzugsweise wird eine Setback-Temperatur ermittelt, bei der die Innenraumtemperiervorrichtung spätestens eingeschaltet werden muss, sodass bei der erwarteten Personenrückkehr die Solltemperatur zumindest im Wesentlichen erreicht wird. Vorzugsweise wird eine aktive Regelung der Innenraumtemperatur ausgeschaltet, bis die ermittelte Setback-Temperatur erreicht wird. Unter einer "natürlichen Erhöhung/Absenkung" soll dabei insbesondere eine passive Änderung der Innenraumtemperatur, vorzugsweise frei von einer Wärmezufuhr und/oder Wärmeabfuhr durch die Innenraumtemperiervorrichtung, verstanden werden. Insbesondere konvergiert die Innenraumtemperatur bei deaktivierter Innenraumtemperiervorrichtung gegen eine Gleichgewichtstemperatur, vorzugsweise zumindest im Wesentlichen gegen die Außentemperatur. Es ist denkbar, dass die Innenraumtemperatur zumindest im Wesentlichen unverändert bleibt, wenn die Außentemperatur zumindest in Wesentlichen der Innenraumtemperatur entspricht. Die Innenraumtemperiervorrichtung wird dabei erst zum Zeitpunkt der Personenrückkehrerwartung eingeschaltet. Unter einer "Setback-Temperatur" soll dabei insbesondere eine Innenraumtemperatur, deren Abweichung von einer Solltemperatur in einer verbleibenden Zeit, vorzugsweise Zeitdauer, bis zu einer erwarteten Personenrückkehr, gerade noch auf null gebracht werden kann, verstanden werden. Unter "zumindest im Wesentlichen" soll in diesem Zusammenhang insbesondere verstanden werden, dass eine Abweichung von einem vorgegebenen Wert insbesondere weniger als 25%, vorzugsweise weniger als 10% und besonders bevorzugt weniger als 5% des vorgegebenen Werts abweicht. Die Setback-Temperatur $T_{Setback}$ kann beispielsweise über Gleichung 1 ermittelt werden, wobei die Solltemperatur $T_{soll}$ mit einem Gebäudekennwert $k$ und einer Zeitdauer $\Delta t$ berücksichtigt wird.

$$T_{Setback} = T_{Soll} - k \cdot \Delta t \qquad (Gl.\ 1)$$

Ferner wird vorgeschlagen, dass die Personenabwesenheitserwartung automatisch an ein Nutzerverhalten angepasst wird. Vorteilhaft kann ein besonders hoher Komfort bereitgestellt werden, da insbesondere eine Änderung im Nutzerverhalten automatisch berücksichtigt wird und die Regelung nicht aufwändig durch eine Änderung in der Einstellung, beispielsweise durch einen Kundendienst, angepasst werden muss. Vorzugsweise ist das Nutzerverhalten zumindest als eine Information zumindest über einen Zeitpunkt und/oder eine Zeitdauer der Personenabwesenheit ausgebildet. Alternativ könnten auch weitere Informationen, wie beispielsweise eine Schlafzeit/Ruhezeit oder dergleichen, berücksichtigt werden. Vorzugsweise wird die automatische Anpassung an das Nutzerverhalten während eines Betriebs und frei von einem Eingriff eines Bedieners und/der eines Technikers, wie beispielsweise in einem Einstell- und/oder Kalibriervorgang, durchgeführt. Vorzugsweise wird die automatische Anpassung kontinuierlich im Betrieb durchgeführt. Vorzugsweise wird die automatische Anpassung des Nutzerverhaltens durch einen Algorithmus durchgeführt, welcher zumindest von dem Nutzerverhalten lernt. Die Personenabwesenheitserwartung wird automatisch an das Nutzerverhalten angepasst, indem jede weitere Personenabwesenheit, insbesondere jede/r weitere Zeitpunkt und/oder Zeitdauer der Personenabwesenheit, automatisch erfasst wird und in die Personenabwesenheitserwartung eingerechnet wird. Unter einer "automatischen Anpassung" soll dabei insbesondere eine selbsttätig, vorzugsweise frei von einer Einflussnahme durch einen Bediener und/oder einen Techniker, durchgeführte Veränderung, verstanden werden. Unter einem "Nutzerverhalten" soll dabei insbesondere ein Personenabwesenheitsverhalten, beispielsweise ein Pausenverhalten, von Personen, insbesondere Zeitpunkt und/oder Zeitdauer der Personenabwesenheitsdauer der sich im Innenraum aufhaltenden Person/en, welches an eine Tageszeit/an ein Tageszeitintervall gekoppelt ist, verstanden werden.

Überdies wird vorgeschlagen, dass die Personenabwesenheitserwartung ermittelt wird, indem über eine definierte Aufzeichnungsdauer detektierte Zeitpunkte und/oder Zeitdauern von Personenabwesenheiten berücksichtigt werden. Vorteilhaft kann eine besonders hohe Genauigkeit in der Personenabwesenheitserwartung bereitgestellt werden, da insbesondere Änderungen im Nutzerverhalten automatisch erkannt werden und da insbesondere durch eine Änderung der definierten Zeitdauer ein Nutzerverhalten besonders gut abgebildet werden kann. Beispielsweise könnte eine Aufzeichnungsdauer zur Berücksichtigung aller detektierten Zeitdauern und Zeitpunkte von Personenabwesenheiten über die letzten 6 Monate oder 4 Wochen oder eine vergleichbare, dem Fachmann als sinnvoll erscheinende Aufzeichnungsdauer zugrunde gelegt werden. Alternativ könnten auch alle jemals gemessenen Zeitdauern und Zeitpunkte von Personenabwesenheiten berücksichtigt werden. Es ist denkbar, dass die detektierten Personenabwesenheitsdauern gewichtet werden, wobei ältere Ereignisse weniger stark und neuere Ereignisse stärker gewichtet werden.

Des Weiteren wird vorgeschlagen, dass die Personenabwesenheitserwartung in Abhängigkeit von zumindest einem Tageszeitintervall ermittelt wird. Vorteilhaft kann eine besonders hohe Genauigkeit in der Personenabwesenheitserwartung bereitgestellt werden, da insbesondere Personenabwesenheitserwartungen für verschiedene Uhrzeiten berücksichtigt werden können. Vorzugsweise wird die Zeitdauer der Personenabwesenheit dem Tageszeitintervall zugrunde gelegt, wenn der Startzeitpunkt der Personenabwesenheitsdauer in dem Tageszeitintervall liegt. Vorzugsweise wird eine Tageszeitdauer von einer Stunde als definiertes Tageszeitintervall zugrunde gelegt. Es ist auch denkbar, dass für verschiedene Abwesenheitsszenarien verschiedene Tageszeitintervalle definiert werden. Beispielsweise könnte von 8 Uhr bis 10 Uhr eine Frühstückspause, von 11 Uhr bis 15 Uhr eine Mittagspause und von 16 Uhr bis 21 Uhr ein Feierabendereignis definiert werden. Alternativ sind verschiedene Abwesenheitsszenarien, beispielsweise für Anwendungen in Hotels oder Schulen oder auf Messen oder dergleichen, denkbar. Es ist denkbar, dass das Tageszeitintervall für jeden Wochentag individuell ermittelt wird. Beispielsweise könnten Wochenendtage nicht mitberücksichtigt werden.

Überdies wird vorgeschlagen, dass die Personenabwesenheitserwartung ein statistisches Modell umfasst, mittels welchem eine Wahrscheinlichkeit für einen Personenrückkehrzeitpunkt und/oder eine Abweichung von dem Personenrückkehrzeitpunkt ermittelt wird. Vorteilhaft kann eine besonders hohe Präzision bereitgestellt werden, da insbesondere durch eine Berücksichtigung des statistischen Modells in der Personenabwesenheitserwartung der Innenraum präzise temperiert werden kann. Vorteilhaft können Kosten reduziert werden, da insbesondere durch das statistische Modell nur gelernte Variablen und nicht alle zurückliegenden Messdaten gespeichert werden müssen. Vorzugsweise wird die Personenabwesenheitserwartung durch das statistische Modell quantifiziert. Vorzugsweise wird das statistische Modell mit Messdaten aus vergangenen Personenabwesenheitsereignissen gefüttert, wodurch das statistische Modell angelernt wird. Vorzugsweise wird mit dem statistischen Modell eine Wahrscheinlichkeit für eine Abwesenheitszeitdauer ermittelt. Vorzugsweise wird über das statistische Modell ermittelt, wann ein Nutzer am wahrscheinlichsten zurückkehrt und/oder wie hoch eine Wahrscheinlichkeit für verschiedene Abweichungen von dem Personenrücckehrzeitpunkt ist. Vorzugsweise wird über die aufgezeichneten vergangenen Personenabwesenheitsereignisse eine Gauß'sche Normalverteilung erstellt. Alternativ könnten die aufgezeichneten vergangenen Personenabwesenheitsereignisse mittels einer Weibull-Verteilung, Student-t-Verteilung, Johnson's Su-Verteilung oder einer vergleichbaren, dem Fachmann als sinnvoll erscheinenden Wahrscheinlichkeitsverteilung ausgewertet werden. Vorzugsweise können mittels des statistischen Modells einzelne Ereignisse zumindest im Wesentlichen eliminiert werden. Beispielsweise könnte das statistische Modell die in Gleichung 2 abgebildete Gauß'sche Normalverteilung umfassen, welche die Personenabwesenheitserwartung $f(x)$ in Abhängigkeit von einer Standardabweichung $\sigma$ und einem Erwartungswert $\mu$ ausgibt.

$$f(x) = \frac{1}{\sigma\sqrt{2\pi}} e^{-\frac{1}{2}(\frac{x-\mu}{\sigma})^2} \qquad \text{(Gl. 2)}$$

Insbesondere wird von dem statistischen Modell die Standardabweichung und der Erwartungswert mittels den vergangenen aufgezeichneten Personenabwesenheitsereignissen errechnet.

Ergänzend wird vorgeschlagen, dass die Innenraumtemperatur zusätzlich zumindest in Abhängigkeit von einer Aufheiz- und/oder Abkühlgeschwindigkeit des Innenraums geregelt wird, welche automatisch an einen Gebäudekennwert und/oder eine Außentemperatur angepasst wird. Vorteilhaft kann eine besonders hohe Temperiergenauigkeit bereitgestellt werden, da insbesondere der Gebäudekennwert und/oder die Außentemperatur bei der Regelung der Innenraumtemperatur berücksichtigt wird. Vorzugsweise wird bei jeder Aktivierung der Innenraumtemperiervorrichtung in Abhängigkeit von der Außentemperatur und der Innenraumtemperatur, insbesondere automatisch, eine Abkühl- oder Aufheizkurve erstellt. Vorzugsweise wird eine Aufheizgeschwindigkeit und/oder eine Abkühlgeschwindigkeit ermittelt, welche zumindest von der Außentemperatur und der Innenraumtemperatur abhängt. Vorzugsweise wird ein Temperaturgradient ermittelt, welcher die Aufheiz- und/oder Abkühlgeschwindigkeit in Abhängigkeit von der Innenraum- und Außentemperatur beschreibt. Alternativ könnte die Abkühlkurve in diskreten Zeitschritten, beispielsweise alle 5 Minuten oder 10 Minuten, ermittelt werden. Vorzugsweise wird die automatische Erstellung der Abkühl- oder Aufheizkurve und/oder die Ermittlung der Aufheiz- und/oder Abkühlgeschwindigkeit während eines Betriebs und frei von einem Eingriff eines Bedieners und/der eines Technikers, wie beispielsweise in einem Einstell- und/oder Kalibriervorgang, durchgeführt. Vorzugsweise werden Änderungen an den Gebäudeeigenschaften automatisch erfasst. Vorzugsweise wird der Gebäudekennwert durch einen Algorithmus ermittelt, welcher einen gleitenden Mittelwert über die vergangenen Abkühl- und/oder Aufheizkurven bildet. Insbesondere werden die, insbesondere über den Aufzeichnungszeitraum detektierten, ermittelten Aufheiz- und/oder Abkühlgeschwindigkeiten, vorzugsweise mit einem gleitenden Mittelwert, gewichtet.

Außerdem wird vorgeschlagen, dass anhand der Personenabwesenheitserwartung eine Setback-Temperatur ermittelt wird, mittels welcher die Innenraumtemperatur während einer Personenabwesenheit geregelt wird, wobei die Setback-Temperatur umso näher an eine Solltemperatur der Innenraumtemperatur vor der detektierten Personenabwesenheit angepasst wird, je geringer die Zeitdifferenz zum erwarteten Personenrückkehrzeitpunkt wird. Vorteilhaft kann ein besonders hoher Komfort bereitgestellt werden, da insbesondere durch die Anpassung der Setback-Temperatur der Innenraum präzise temperiert werden kann, da der Raum bei der wahrscheinlichen Personenrückkehr zumindest bereits vortemperiert ist. Vorzugsweise wird die Setback-Temperatur umso näher an die Solltemperatur angenähert, je höher die Wahrscheinlichkeit für eine frühere Personenrückkehr ist. Vorzugsweise wird die Setback-Temperatur stufenweise angepasst. Alternativ könnte die Setback-Temperatur auch stufenlos angepasst werden. Es ist denkbar, dass bei der Vortemperierung ein Temperaturempfinden, beispielsweise ein PMV-Wert berücksichtigt wird. Beispielsweise könnte mittels eines PMV-Werts eine Temperaturabweichung bestimmt werden, welche bei einer vorzeitigen Personenrückkehr tolerierbar ist, weil die Temperaturabweichung vom Nutzer nur als wenig unangenehm empfunden wird.

Zusätzlich wird vorgeschlagen, dass in, insbesondere regelmäßigen, Zeitabständen ein Abgleich zwischen der, insbesondere gemessenen, Innenraumtemperatur und der Setback-Temperatur durchgeführt wird, wodurch eine Aufheiz- und/oder Abkühlgeschwindigkeit angepasst und/oder die Setback-Temperatur nachgeregelt werden kann. Vorteilhaft kann eine besonders hohe Betriebssicherheit bereitgestellt werden, da insbesondere durch den Abgleich zwischen der, insbesondere gemessenen, Innenraumtemperatur und der Setback-Temperatur Störgrößen berücksichtigt werden können. Vorzugsweise wird eine Temperierung aktiviert oder eine Temperierleistung erhöht, sobald die Innenraumtemperatur die Setback-Temperatur erreicht. Vorzugsweise kann durch den Abgleich auf Veränderungen in der Aufheiz- und/oder Abkühlgeschwindigkeit reagiert werden. Insbesondere ist denkbar, dass ein starker Temperaturgradient, beispielsweise durch direkte Sonneneinstrahlung und/oder ein geöffnetes Fenster, durch eine Erhöhung der Temperierleistung ausgeglichen wird. Beispielsweise könnten die Zeitabstände als 5 Minuten, bevorzugt 1 Minute, gewählt werden. Beispielsweise kann die Gleichung 1 durch einen Korrekturfaktor c erweitert werden, wodurch die Störgrößen über die Gleichung 3 eliminiert werden können.

$$T_{Setback} = T_{Soll} - c \cdot k \cdot \Delta t \qquad \text{(Gl. 3)}$$

Ferner wird vorgeschlagen, dass die Innenraumtemperatur auf eine Solltemperatur eingestellt wird, sobald eine Personenanwesenheit, insbesondere unabhängig von der Personenabwesenheitserwartung, detektiert wird. Vorteilhaft kann ein hoher Komfort bereitgestellt werden, da insbesondere bei einer, insbesondere vorzeitigen, detektierten Personenanwesenheit die Innenraumtemperiervorrichtung automatisch eingeschaltet wird. Vorzugsweise wird bei einer, insbesondere vorzeitigen, detektierten Personenanwesenheit die, vorzugsweise vor/bei Startbeginn der Personenabwesenheit eingestellte, Solltemperatur für die Innenraumtemperatur eingestellt. Insbesondere wird die Innenraumtemperiervorrichtung automatisch eingeschaltet, sobald eine Personenanwesenheit detektiert wird. Vorzugsweise wird das Verfahren bei der detektierten Personenanwesenheit automatisch deaktiviert und durch eine aktive Temperaturregelung ersetzt. Alternativ könnte auch eine außentemperaturabhängige oder tageszeitabhängige Solltemperatur vorgegeben werden.

Überdies wird vorgeschlagen, dass die Regelung der Innenraumtemperatur nach einem Ende der Personenabwesenheitserwartung neu gestartet wird, wenn nach einem Ablauf der Zeitdauer für die Personenabwesenheitserwartung eine Personenabwesenheit detektiert wird. Vorteilhaft können geringe Kosten bereitgestellt werden, da insbesondere die Innenraumtemperiervorrichtung beim Ende der Personenabwesenheitserwartung erneut deaktiviert wird, wenn weiterhin eine Personenabwesenheit detektiert wird. Es ist denkbar, dass bei einer detektierten Personenabwesenheit nach Ablauf der Zeitdauer für die Personenabwesenheitserwartung das Verfahren mit einer nächsthöheren

Personenrückkehrwahrscheinlichkeit erneut gestartet wird. Alternativ könnte das Verfahren mit einem festen Wert für die Zeitdauer und/oder die Innenraumtemperatur, insbesondere mit einer zumutbaren Setback-Temperatur, weiter betrieben werden. Alternativ könnte das Verfahren durch eine festgelegte Zeitdauer verlängert werden. Alternativ ist auch denkbar, dass bei der detektierten Personenabwesenheit nach Ablauf der Zeitdauer eine aktive Temperaturregelung der Solltemperatur des Startzeitpunkts der Pause geregelt wird. Alternativ könnten auch kürzere Pausen, wie beispielsweise Raucherpausen oder dergleichen, als weitere Personenabwesenheitserwartungen zugrunde gelegt werden.

Zusätzlich wird eine Innenraumtemperiervorrichtung mit zumindest einer Steuer- und/oder Regeleinheit vorgeschlagen, welche dazu eingerichtet ist, mit dem oben beschriebenen Verfahren eine Innenraumtemperierung zu regeln. Vorteilhaft können geringe Kosten bereitgestellt werden, da insbesondere ein Energieverbrauch durch die Regelung der Innenraumtemperatur in Abhängigkeit von der Personenabwesenheitserwartung geringgehalten werden kann. Vorteilhaft kann ein hoher Nutzerkomfort bereitgestellt werden, da insbesondere bei einer Rückkehr des Nutzers eine Wohlfühltemperatur des Nutzers bereitgestellt wird. Vorteilhaft kann eine besonders hohe Temperiereffizienz bereitgestellt werden, da insbesondere ein Innenraum nur dann temperiert wird, wenn der Nutzer sich in dem Raum aufhält. Es ist denkbar, dass die Steuer- und/oder Regeleinheit als eine externe Steuer- und/oder Regeleinheit, wie beispielsweise eine cloudbasierte Steuer- und/oder Regeleinheit, ausgebildet ist. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Unter "eingerichtet" soll insbesondere speziell programmiert, ausgelegt und/oder ausgestattet verstanden werden. Darunter, dass ein Objekt zu einer bestimmten Funktion eingerichtet ist, soll insbesondere verstanden werden, dass das Objekt diese bestimmte Funktion in zumindest einem Anwendungs- und/oder Betriebszustand erfüllt und/oder ausführt.

Außerdem wird eine Innenraumtemperiervorrichtung vorgeschlagen, die zumindest eine Raumüberwachungssensoreinheit, insbesondere Infrarot- und/oder Radarsensoreinheit, aufweist, welche dazu eingerichtet ist, eine Personenanwesenheit zu detektieren. Vorteilhaft können geringe Kosten bereitgestellt werden, da insbesondere ein Energieverbrauch durch die Regelung der Innenraumtemperatur in Abhängigkeit von der Personenabwesenheitserwartung geringgehalten werden kann. Vorteilhaft kann ein hoher Nutzerkomfort bereitgestellt werden, da insbesondere bei einer Rückkehr des Nutzers eine Wohlfühltemperatur des Nutzers bereitgestellt wird. Vorteilhaft kann eine besonders hohe Temperiereffizienz bereitgestellt werden, da insbesondere ein Innenraum nur dann temperiert wird, wenn der Nutzer sich in dem Raum aufhält. Vorzugsweise ist der Radarsensor dazu eingerichtet, eine Personenanwesenheit/-Personenabwesenheit durch eine Bewegungsdetektion von sich im Innenraum befindenden Personen zu ermitteln. Vorzugsweise ist der Infrarotsensor dazu eingerichtet, eine Personenanwesenheit/Personenabwesenheit durch eine Temperaturdetektion einer Körpertemperatur von sich im Innenraum befindenden Personen zu ermitteln. Vorzugsweise weist die Innenraumtemperiervorrichtung zumindest einen Innenraumtemperatursensor auf, welcher in dem zu temperierenden Innenraum angeordnet ist. Vorzugsweise weist die Innenraumtemperiervorrichtung zumindest einen Außentemperatursensor auf, welcher dazu eingerichtet ist, die Außentemperatur zu messen. Vorzugsweise weist die Innenraumtemperiervorrichtung zumindest eine Uhrzeit-/Kalenderfunktion auf, welche dazu eingerichtet ist, Uhrzeiten und Zeitdauern zu ermitteln und/oder auszuwerten.

Das erfindungsgemäße Verfahren und die erfindungsgemäße Innenraumtemperiervorrichtung sollen hierbei nicht auf die oben beschriebene Anwendung und Ausführungsform beschränkt sein. Insbesondere können das erfindungsgemäße Verfahren und die erfindungsgemäße Innenraumtemperiervorrichtung zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

Fig. 1 eine Innenraumtemperiervorrichtung mit einer Raumüberwachungssensoreinheit,

Fig. 2 ein schematisches Ablaufdiagramm eines Verfahrens zu einer Temperaturregelung,

Fig. 3 ein schematisches Setback-Temperaturverlaufsdiagramm der Temperaturregelung,

Fig. 4 ein schematisches Ablaufdiagramm eines alternativen Verfahrens zur Temperaturregelung und

Fig. 5 ein statistisches Modell zur Auswertung einer Personenabwesenheit in dem alternativen Verfahren zur Temperaturregelung.

Beschreibung des Ausführungsbeispiels

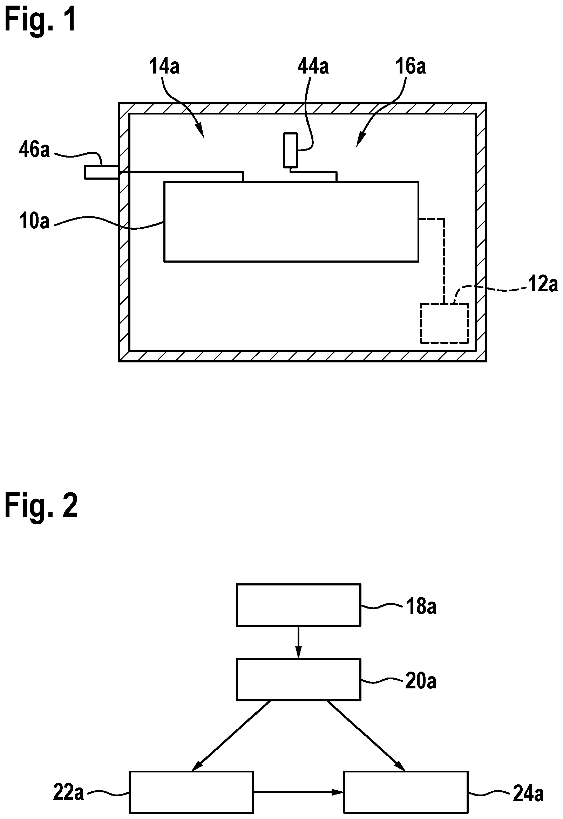

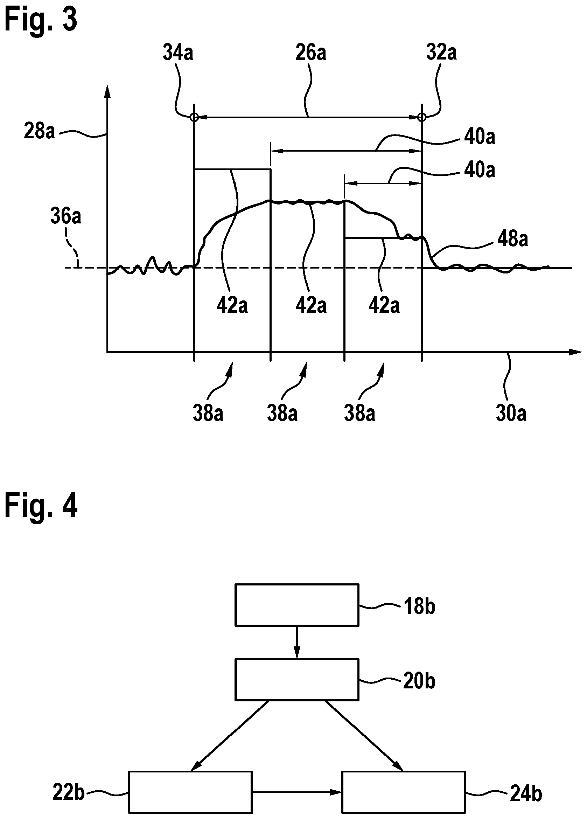

Die Figur 1 zeigt eine Innenraumtemperiervorrichtung 10a. Die Innenraumtemperiervorrichtung 10a ist als eine Heizungs- und/oder Klimaanlage ausgebildet. Die Innenraumtemperiervorrichtung 10a ist dazu eingerichtet, einen Innenraum 16a zu temperieren. Der Innenraum 16a ist als ein Raum eines Gebäudes ausgebildet. Die Innenraumtemperiervorrichtung 10a ist dazu eingerichtet, dem Innenraum 16a eine Wärmeenergie zuzuführen und/oder zu entziehen. Die Innenraumtemperiervorrichtung 10a weist eine Raumüberwachungssensoreinheit 14a auf. Die Raumüberwachungssensoreinheit 14a ist als eine Infrarot- und/oder Radarsensoreinheit ausgebildet. Die Raumüberwachungssensoreinheit 14a ist dazu eingerichtet, eine Personenanwesenheit/Personenabwesenheit zu detektieren. Die Raumüberwachungssensoreinheit 14a weist einen Innenraumtemperatursensor 44a auf. Der Innenraumtemperatursensor 44a ist dazu eingerichtet, eine Innenraumtemperatur 48a in dem Innenraum 16a zu messen. Die Raumüberwachungssensoreinheit 14a weist einen Außentemperatursensor 46a auf. Der Außentemperatursensor 46a ist dazu eingerichtet, eine Außentemperatur außerhalb des Innenraums 16a zu messen. Alternativ könnte die Außentemperatur auch über einen Wetterdienst oder eine vergleichbare externe Datenquelle abrufbar sein. Die Innenraumtemperiervorrichtung 10a weist eine Steuer- und/oder Regeleinheit 12a auf. Die Steuer- und/oder Regeleinheit 12a ist dazu eingerichtet, eine Personenabwesenheitserwartung 26a zu ermitteln (vgl. Fig. 3). Die Steuer- und/oder Regeleinheit 12a ist dazu eingerichtet, eine Aufheiz- und/oder Abkühlgeschwindigkeit des Innenraums 16a in einem Betrieb der Innenraumtemperiervorrichtung 10a in Abhängigkeit von der Außentemperatur zu ermitteln. Die Steuer- und/oder Regeleinheit 12a ist dazu eingerichtet, eine Innenraumtemperierung zumindest abhängig von der Personenabwesenheitserwartung 26a und der Aufheiz- und/oder Abkühlgeschwindigkeit des Innenraums 16a zu regeln.

Die Figur 2 zeigt ein schematisches Ablaufdiagramm eines Verfahrens für die Innenraumtemperiervorrichtung, mit welchem die Innenraumtemperatur 48a geregelt wird.

In einem Verfahrensschritt 18a wird eine Personenabwesenheitserwartung 26a ermittelt (vgl. Fig. 3). Hierzu werden die Zeitpunkte und Zeitdauern der Personenabwesenheiten detektiert. Die Zeitpunkte und Zeitdauern der Personenabwesenheiten werden über eine Aufzeichnungsdauer detektiert. Die Zeitpunkte und Zeitdauern der Personenabwesenheiten innerhalb der Aufzeichnungsdauer werden gespeichert. Die Aufzeichnungsdauer könnte beispielsweise als 6 Monate oder als 1 Monat oder als eine vergleichbare Aufzeichnungsdauer ausgebildet sein. Die Personenabwesenheitserwartung 26a wird einem Tageszeitintervall zugeordnet. Beispielsweise werden alle detektierten Zeitdauern der Personenabwesenheit, welche einen Startzeitpunkt zwischen 12 Uhr und 13 Uhr aufweisen, diesem Tageszeitintervall zugeordnet. Die Zeitdauern der Personenabwesenheit von jedem der Tageszeitintervalle werden in Zeitspannen aufgeteilt. Die Zeitspannen zu einer Kategorisierung der Zeitdauern der detektierten Personenabwesenheiten betragen 15, 30, 45 und 60 Minuten. Beispielsweise werden zwischen 12 Uhr und 13 Uhr vier Zeitspannen vorgegeben. Die Zeitspanne könnte jedoch auch als 5 Minuten oder eine vergleichbare Zeitspanne ausgebildet sein. Die über die definierte Aufzeichnungsdauer ermittelten Zeitspannen der detektierten Zeitdauern der Personenabwesenheit des Tageszeitintervalls werden mit der Anzahl der in der Zeitspanne eingeordneten Personenabwesenheitsdauern des Tageszeitintervalls gewichtet. Alternativ könnten die Zeitdauern der Personenabwesenheiten auch vergleichbar gewichtet werden. Beispielsweise könnten ältere Ereignisse weniger stark als neuere Ereignisse gewichtet werden. Es wird die Zeitspanne mit der höchsten Wahrscheinlichkeit und/oder die Zeitspanne mit der größten Anzahl an über die Aufzeichnungsdauer detektierten Personenabwesenheiten als Zeitdauer für die Personenabwesenheitserwartung 26a gewählt. Es ist auch denkbar, dass die Zeitdauern der Personenabwesenheiten eines Tageszeitintervalls exakt erfasst werden und zu einem arithmetischen Mittelwert verrechnet werden. Die Personenabwesenheitserwartung 26a wird automatisch an ein Nutzerverhalten angepasst. Jede weitere detektierte Personenabwesenheit beeinflusst die Personenabwesenheitserwartung 26a.

Die Innenraumtemperatur 48a wird zusätzlich in Abhängigkeit von einer Aufheiz- und/oder Abkühlgeschwindigkeit des Innenraums 16a geregelt. Die Aufheiz- und/oder Abkühlgeschwindigkeit des Innenraums 16a hängt von der Innenraumtemperatur 48a und der Außentemperatur ab. Die Aufheiz- und/oder Abkühlgeschwindigkeit des Innenraums 16a wird während eines Betriebs aufgezeichnet. Die Aufheiz- und/oder Abkühlgeschwindigkeit des Innenraums 16a wird automatisch an einen Gebäudekennwert und/oder eine Außentemperatur angepasst. Zur Ermittlung der Aufheiz- und/oder Abkühlgeschwindigkeit wird ein gleitender Mittelwert über die in der Aufzeichnungsdauer ermittelten Aufheiz- und/oder Abkühlgeschwindigkeiten gebildet. Die Aufheiz- und/oder Abkühlgeschwindigkeit des Innenraums 16a wird als ein Temperaturgradient ermittelt.

In einem weiteren Verfahrensschritt 20a wird die Innenraumtemperatur 48a in Abhängigkeit von der Personenabwesenheitserwartung 26a und der Aufheiz- und/oder Abkühlgeschwindigkeit des Innenraums 16a geregelt (vgl. Fig. 3). Hierzu wird von einem aktuellen Zeitpunkt aus eine Restdauer 40a der Personenabwesenheitserwartung 26a ermittelt. Anhand der Aufheiz- und/oder Abkühlgeschwindigkeit wird ermittelt, ob die Restdauer 40a der Personenabwesenheitserwartung 26a ausreicht, sodass eine Solltemperatur 36a, welche zu einem Startzeitpunkt 34a der Personenabwesenheit eingestellt war, ausgehend von der aktuellen Innenraumtemperatur 48a erreicht wird. Anhand der Personenabwesenheitserwartung 26a wird eine Setback-Temperatur 42a bestimmt. Mittels der Setback-Temperatur 42a wird die Innenraumtemperatur 48a während der Personenabwesenheit geregelt. Die Innenraumtemperiervorrichtung 10a wird in einen Standby-Modus überführt, bis die Setback-Temperatur 42a von der Innenraumtemperatur 48a erreicht wird. Bei Erreichen der Setback-Temperatur 42a wird die Innenraumtemperierung aktiviert. Je geringer die Restdauer 40a der Personenabwesenheitserwartung 26a ist, desto näher ist die Setback-Temperatur 42a an der Solltemperatur 36a. Die Setback-Temperatur 42a wird umso näher an die Solltemperatur 36a der Innenraumtemperatur 48a vor der detektierten Personenabwesenheit angepasst je geringer die Zeitdifferenz zum erwarteten Personenrückkehrzeitpunkt wird. Die Setback-Temperatur 42a wird für diskrete Zeiträume 38a ermittelt. Der diskrete Zeitraum 38a wird als 15 Minuten festgelegt. Der diskrete Zeitraum 38a könnte jedoch auch länger oder kürzer als 15 Minuten gewählt werden. Der diskrete Zeitraum 38a kann in einem Setback-Temperaturverlaufsdiagramm dargestellt werden (vgl. Fig. 3). Auf einer Ordinate 28a des Setback-Temperaturverlaufsdiagramms wird die Setback-Temperatur 42a aufgetragen. Auf einer Abszisse 30a des Setback-Temperaturverlaufsdiagramms wird die Zeit aufgetragen. Anhand der Personenabwesenheitserwartung 26a wird ein erwarteter Personenrückkehrzeitpunkt 32a ermittelt, wenn ein Startzeitpunkt 34a der Personenabwesenheit detektiert wird. Zu einem Startzeitpunkt 34a jedes diskreten Zeitraums 38a wird die verbleibende Restdauer 40a bis zum erwarteten Personenrückkehrzeitpunkt 32a ermittelt. Alternativ könnte die Setback-Temperatur 42a auch in Echtzeit ermittelt werden. In dem in Fig. 3 gezeigten Ausführungsbeispiel wird die Personenabwesenheitserwartung 26a in drei Zeiträume mit drei unterschiedlichen Setback-Temperaturen 42a aufgeteilt. In regelmäßigen Zeitabständen wird ein Abgleich zwischen der gemessenen Innenraumtemperatur 48a und der Setback-Temperatur 42a durchgeführt. Es wird eine Aufheiz- und/oder Abkühlgeschwindigkeit angepasst, wenn die Setback-Temperatur 42a von der Innenraumtemperatur 48a erreicht wird. Es wird die Setback-Temperatur 42a nachgeregelt, wenn die Innenraumtemperatur 48a die Setback-Temperatur 42a erreicht. Durch den regelmäßigen Abgleich zwischen der gemessenen Innenraumtemperatur 48a und der Setback-Temperatur 42a können Störgrößen berücksichtigt werden. Beispielsweise kann eine Temperierleistung angepasst werden, wenn eine direkte Sonneneinstrahlung und/oder ein geöffnetes Fenster die Innenraumtemperatur 48a verändert.

In einem weiteren Verfahrensschritt 22a wird die Innenraumtemperatur 48a auf die Solltemperatur 36a eingestellt (vgl. Fig. 3). Die Solltemperatur 36a wird unabhängig von der Personenabwesenheitserwartung 26a eingestellt, wenn eine Personenanwesenheit detektiert wird. Die Solltemperatur 36a wird auf eine eingestellte Temperatur vor dem Startzeitpunkt 34a der Personenabwesenheit gesetzt. Alternativ könnte auch eine von der eingestellten Temperatur zum Startzeitpunkt 34a der Personenabwesenheit verschiedene Solltemperatur 36a eingestellt werden.

In einem weiteren Verfahrensschritt 24a wird die Regelung der Innenraumtemperatur 48a nach einem Erreichen des Personenrückkehrzeitpunkts 32a neu gestartet, wenn bis zum Zeitpunkt des Personenrückkehrzeitpunkts 32a eine Personenabwesenheit detektiert wird. Sobald eine Personenanwesenheit detektiert wird, wird automatisch der weitere Verfahrensschritt 22a ausgeführt. Es ist denkbar, dass bei einer detektierten Personenabwesenheit nach Ablauf der Zeitdauer für die Personenabwesenheitserwartung 26a das Verfahren mit einer nächsthöheren Personenrückkehrwahrscheinlichkeit erneut gestartet wird. Alternativ könnte die Innenraumtempervorrichtung 10a mit einer zumutbaren Setback-Temperatur 42a erneut abgeschaltet werden. Alternativ könnte der Verfahrensschritt 24a durch eine festgelegte Zeitdauer verlängert werden. Alternativ ist auch denkbar, dass bei der detektierten Personenabwesenheit nach Ablauf der Zeitdauer eine aktive Temperaturregelung der Solltemperatur 36a des Startzeitpunkts 34a der Personenabwesenheit durchgeführt wird. Alternativ könnten auch kürzere Personenabwesenheitserwartungen 26a zugrunde gelegt werden. Die kürzeren Personenabwesenheitserwartungen 26a könnten beispielsweise Raucherpausen/Kaffeepausen oder dergleichen sein.

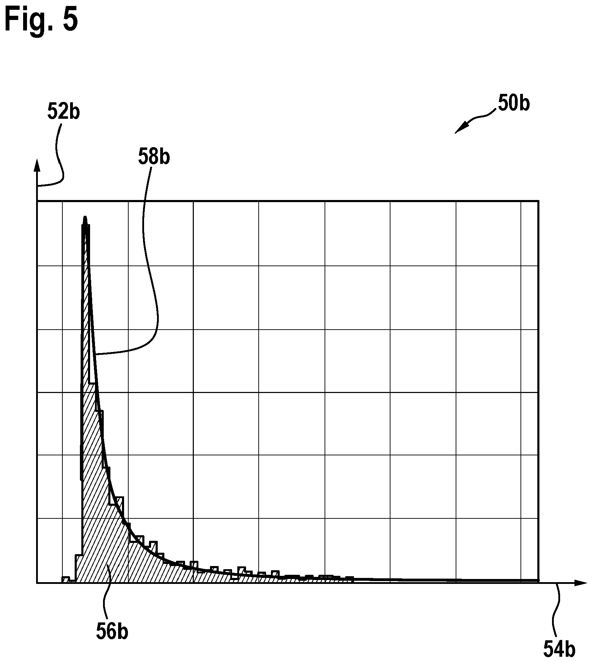

In den Figuren 4 und 5 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 und 5 ist der Buchstabe a durch den Buchstaben b ersetzt.

Die Figur 4 zeigt ein schematisches Ablaufdiagramm eines alternativen Verfahrens, mit welchem die Innenraumtemperatur 48a geregelt wird.

In einem alternativen Verfahrensschritt 18b wird eine alternative Personenabwesenheitserwartung 26b ermittelt. Hierbei werden Zeitpunkte und Zeitdauern von Personenabwesenheiten detektiert. Die Zeitpunkte und Zeitdauern der Personenabwesenheiten werden über eine Aufzeichnungsdauer detektiert. Die Zeitpunkte und Zeitdauern der Personenabwesenheiten werden innerhalb einer Aufzeichnungsdauer gespeichert. Die gespeicherten Zeitpunkte und Zeitdauern der Personenabwesenheiten werden mit einem statistischen Modell ausgewertet. Mit dem statistischen Modell wird eine Wahrscheinlichkeit für einen Personenrücckehrzeitpunkt ermittelt. Mit dem statistischen Modell wird eine Wahrscheinlichkeit für eine Abweichung von dem Personenrückkehrzeitpunkt ermittelt.

Die weiteren Verfahrensschritte 20b, 22b, 24b werden durch die Verfahrensschritte 20a, 22a, 24a beschrieben.

Die Figur 5 zeigt eine Verteilungskurve 50b. Der Verteilungskurve 50b liegen Messwerte 56b zugrunde. Die Messwerte 56b sind als Zeitdauern verschiedener Personenabwesenheitsereignisse ausgebildet. Die Verteilungskurve 50b weist eine Abszisse 54b auf. Auf der Abszisse 54b sind verschiedene Zeitdauern aufgetragen. Die Verteilungskurve 50b weist eine Ordinate 52b auf. Auf der Ordinate 52b ist eine Anzahl der Zeitdauern aufgetragen. Zusätzlich ist eine Verteilung 58b über die gespeicherten Messwerte 56b aufgetragen. Die Verteilung 58b kann als eine Gauß'sche Normalverteilung ausgebildet sein. Die Verteilung 58b kann als eine Weibull-Verteilung, Student-t-Verteilung, Johnson's Su-Verteilung oder eine vergleichbare, dem Fachmann als sinnvoll erscheinende Wahrscheinlichkeitsverteilung ausgebildet sein.

**Patentansprüche**

1. Verfahren zum Betrieb einer Innenraumtempervorrichtung (10a; 10b), insbesondere einer Heizungs- und/oder Klimaanlage, mit welchem eine Innenraumtemperatur (48a; 48b) eines Innenraums (16a; 16b) geregelt wird, **dadurch gekennzeichnet,**

**dass** in zumindest einem Verfahrensschritt (18a; 18b) eine Personenabwesenheitserwartung (26a; 26b) ermittelt und in zumindest einem weiteren Verfahrensschritt (20a; 20b , 22a; 22b; 24a; 24b) die Innenraumtemperatur (48a; 48b) zumindest in Abhängigkeit von der Personenabwesenheitserwartung (26a; 26b) geregelt wird.

2. Verfahren nach Anspruch 1, **dadurch gekennzeichnet, dass** die Personenabwesenheitserwartung (26a; 26b) automatisch an ein Nutzerverhalten angepasst wird.

3. Verfahren nach einem der vorhergehenden Ansprüche, **dadurch gekennzeichnet, dass** die Personenabwesenheitserwartung (26a; 26b) ermittelt wird, indem über eine definierte Aufzeichnungsdauer detektierte Zeitpunkte und/oder Zeitdauern von Personenabwesenheiten berücksichtigt werden.

4. Verfahren nach einem der vorhergehenden Ansprüche, **dadurch gekennzeichnet, dass** die Personenabwesenheitserwartung (26a; 26b) in Abhängigkeit von zumindest einem Tageszeitintervall ermittelt wird.

5. Verfahren nach einem der vorhergehenden Ansprüche, **dadurch gekennzeichnet, dass** die Personenabwesenheitserwartung (26b) ein statistisches Modell umfasst, mittels welchem eine Wahrscheinlichkeit für einen Personenrückkehrzeitpunkt und/oder eine Abweichung von dem Personenrückkehrzeitpunkt ermittelt wird.

6. Verfahren nach einem der vorhergehenden Ansprüche, **dadurch gekennzeichnet, dass** die Innenraumtemperatur (48a; 48b) zusätzlich zumindest in Abhängigkeit von einer Aufheiz- und/oder Abkühlgeschwindigkeit des Innenraums (16a; 16b) geregelt wird, welche automatisch an einen Gebäudekennwert und/oder eine Außentemperatur angepasst wird.

7. Verfahren nach einem der vorhergehenden Ansprüche, **dadurch gekennzeichnet, dass** anhand der Personenabwesenheitserwartung (26a; 26b) eine Setback-Temperatur (42a; 42b) ermittelt wird, mittels welcher die Innenraumtemperatur (48a; 48b) während einer Personenabwesenheit geregelt wird, wobei die Setback-Temperatur (42a; 42b) umso näher an eine Solltemperatur (36a; 36b) der Innenraumtemperatur (48a; 48b) vor der detektierten Personenabwesenheit angepasst wird je geringer die Zeitdifferenz zum erwarteten Personenrückkehrzeitpunkt wird.

8. Verfahren nach einem der vorhergehenden Ansprüche, **dadurch gekennzeichnet, dass** in, insbesondere regelmäßigen, Zeitabständen ein Abgleich zwischen der, insbesondere gemessenen, Innenraumtemperatur (48a; 48b) und der Setback-Temperatur (42a; 42b) durchgeführt wird, wodurch eine Aufheiz- und/oder Abkühlgeschwindigkeit des Innenraums (16a; 16b) angepasst und/oder die Setback-Temperatur (42a; 42b) nachgeregelt werden kann.

9. Verfahren nach einem der vorhergehenden Ansprüche, **dadurch gekennzeichnet, dass** die Innenraumtemperatur (48a; 48b) auf die Solltemperatur (36a; 36b) eingestellt wird, sobald eine Personenanwesenheit, insbesondere unabhängig von der Personenabwesenheitserwartung (26a; 26b), detektiert wird.

10. Verfahren nach einem der vorhergehenden Ansprüche, **dadurch gekennzeichnet, dass** die Regelung der Innenraumtemperatur (48a; 48b) nach einem Ende der Personenabwesenheitserwartung (26a; 26b) neu gestartet wird, wenn nach einem Ablauf der Zeitdauer für die Personenabwesenheitserwartung (26a; 26b) eine Personenabwesenheit detektiert wird.

11. Innenraumtemperiervorrichtung (10a; 10b) mit zumindest einer Steuer- und/oder Regeleinheit (12a; 12b), welche dazu eingerichtet ist, mit einem Verfahren, insbesondere nach einem der vorhergehenden Ansprüche, eine Innenraumtemperierung zumindest abhängig von einer ermittelten Personenabwesenheitserwartung (26a; 26b) zu regeln.

12. Innenraumtemperiervorrichtung (10a; 10b) nach Anspruch 11, **gekennzeichnet durch** zumindest eine Raumüberwachungssensoreinheit (14a; 14b), insbesondere Infrarot- und/oder Radarsensoreinheit, welche dazu eingerichtet ist, eine Personenanwesenheit zu detektieren.

# Fig. 1

# Fig. 2

# Fig. 3

# Fig. 4

Fig. 5

Europäisches
Patentamt

European
Patent Office

Office européen
des brevets

# EUROPÄISCHER RECHERCHENBERICHT

**Nummer der Anmeldung**

EP 24 18 7146

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/330652 A1 (KIM KYUNG-JAE [KR]) 19. November 2015 (2015-11-19) | 1-5,7-12 | INV. G05D23/19 |
| Y | * Absätze [0003], [0009], [0013]-[0014], [0033], [0038]-[0040], [0045], [0050]-[0051], [0060], [0077]; * ----- | 6 | F24F11/30 |
| X | US 2020/318844 A1 (MATSUOKA YOKY [US] ET AL) 8. Oktober 2020 (2020-10-08) * Absätze [0165], [0167], [0171]-[0172], [0177]. * ----- | 1,11 | |
| Y | US 2014/222217 A1 (FADELL ANTHONY MICHAEL [US] ET AL) 7. August 2014 (2014-08-07) * Absatz [0055], Figur 6. * ----- | 6 | |

**RECHERCHIERTE SACHGEBIETE (IPC)**

G05D

Der vorliegende Recherchenbericht wurde für alle Patentansprüche erstellt

| Recherchenort | Abschlußdatum der Recherche | Prüfer |
|---|---|---|
| München | 18. Oktober 2024 | Roch, Vincent |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**
EP 24 18 7146

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-10-2024

| Im Recherchenbericht angeführtes Patentdokument | Datum der Veröffentlichung | Mitglied(er) der Patentfamilie | Datum der Veröffentlichung |
|---|---|---|---|
| US 2015330652 A1 | 19-11-2015 | US 2015330652 A1 | 19-11-2015 |
| | | WO 2015174795 A1 | 19-11-2015 |
| US 2020318844 A1 | 08-10-2020 | US 8630741 B1 | 14-01-2014 |
| | | US 2014101082 A1 | 10-04-2014 |
| | | US 2016025367 A1 | 28-01-2016 |
| | | US 2018299163 A1 | 18-10-2018 |
| | | US 2020318844 A1 | 08-10-2020 |
| US 2014222217 A1 | 07-08-2014 | US 2012065783 A1 | 15-03-2012 |
| | | US 2014222217 A1 | 07-08-2014 |
| | | US 2015167996 A1 | 18-06-2015 |
| | | WO 2012037241 A1 | 22-03-2012 |

EPO FORM P0461

Für nähere Einzelheiten zu diesem Anhang : siehe Amtsblatt des Europäischen Patentamts, Nr.12/82